# FASCICULE DE BREVET EUROPEEN

(11) **EP 4 339 084 B1**
(45) Date de publication et mention de la délivrance du brevet: **29.07.2026**
(21) Numéro de dépôt: 23197298.5
(22) Date de dépôt: 14.09.2023
(51) Int. Cl.: B62K 5/027, B62K 5/06, B62K 5/10, B62K 7/04

(54) **VÉHICULE TRICYCLE**
DREIRADFAHRZEUG
TRICYCLE VEHICLE

(30) Priorité: 14.09.2022 FR 2209264
(43) Date de publication de la demande: 20.03.2024
(73) Titulaire: Ligier Group, 03200 Abrest (FR)
(72) Inventeur: BOSTVIRONNOIS, Stéphane, 03340 BESSAY SUR ALLIER (FR); DIDIER LAURENT, Thomas, 03200 ABREST (FR); PRADIER, Thibaut, 03200 ABREST (FR)
(74) Mandataire: Gevers & Orès

(56) Documents cités:
- EP-A1- 4 021 788
- WO-A1-2020/079634
- FR-A- 1 482 387
- FR-A1- 3 020 334
- US-A1- 2010 072 721

## Description

### Domaine technique de l'invention

L'invention concerne un véhicule tricycle, notamment destiné à supporter des charges de poids élevé, particulièrement intéressant dans les services de livraison, mais aussi comme simple moyen de transport, avec ou sans charge additionnelle. Il s'agit en particulier d'un véhicule tricycle à moteur, notamment électrique.

### Arrière-plan technique

Dans le domaine des cycles, il est déjà connu des cycles à deux roues du type dit « scooter » qui sont appréciés pour le confort de conduite qu'il procure en raison du positionnement du conducteur. Cela étant, quand il s'agit de transporter de lourdes charges, ceux-ci peuvent s'avérer inadaptés, notamment par manque de stabilité, que cela soit en course ou à l'arrêt. Pour améliorer la stabilité d'un cycle, il est connu d'avoir recours à un cycle à trois roues ou tricycle. Cependant, ceux-ci posent des problèmes de maniabilité, notamment de rayons de braquage.

Des tricycles munis d'une paire de roues à l'avant ont été proposés et sont désormais couramment utilisés grâce à leur bonne maniabilité. Leur stabilité est néanmoins inférieure à celle d'un tricycle classique avec paire de roues à l'arrière.

Pour gagner en stabilité et en sécurité, la partie avant des tricycles classiques avec paire de roues à l'arrière peut s'incliner par rapport à la partie arrière portant la charge, notamment dans les virages pour éviter que la charge n'entraîne un basculement complet du véhicule et une chute. Il peut s'agir, par exemple, d'un système pendulaire permettant une articulation entre l'avant et l'arrière du véhicule.

Cela étant pour les véhicules portant des charges très lourdes et/ou volumineuses, par exemple supérieures à 100 kg, les systèmes pendulaires connus ne sont pas suffisants pour assurer une conduite en toute sécurité. Notamment, ils ne permettent pas un franchissement facile d'obstacles ou la circulation sur des sols irréguliers.

L'invention se propose de pallier les inconvénients précités.

Document FR3020334A1 montre le préambule de la revendication 1.

### Résumé de l'invention

Ainsi, l'invention concerne un véhicule tricycle comprenant un équipage arrière, ledit équipage comprenant une armature de support, liée à deux roues dudit véhicule, et un châssis d'une charge, ledit véhicule comprenant en outre un cadre configuré pour permettre l'installation d'un conducteur dudit véhicule, ledit cadre étant articulé en rotation autour d'un axe d'articulation par rapport audit châssis de manière à permettre un basculement du cadre par rapport audit équipage arrière en direction de la chaussée de part et d'autre d'une position verticale, ladite armature de support étant articulée sur ledit châssis par une liaison rotule de sorte à autoriser un soulèvement simultanée des deux roues ou un soulèvement de l'une seulement desdites roues, en fonction des obstacles rencontrés.

On dispose de la sorte d'un véhicule présentant une bonne stabilité grâce à son caractère tricycle et une bonne maniabilité par le basculement du cadre par rapport à l'équipage arrière.

Par ailleurs, la liaison rotule entre l'armature de support lié aux roues et le châssis, permet un mouvement de l'armature de support par rapport au châssis.

Ainsi, le mouvement autorisé par cette liaison rotule située entre l'armature de support liée aux roues et le châssis font en sorte que seule la partie armature de support de l'équipage subit un déplacement dû aux obstacles rencontrés.

Le véhicule peut ainsi s'adapter au terrain sur lequel il roule, en particulier aux obstacles à franchir.

En effet, le fait que les deux roues puissent se soulever et que ce soulèvement soit isolé du châssis et donc du reste de l'équipage arrière, permet le franchissement d'obstacle sans que tout l'équipage arrière ressente de trop importantes secousses.

En outre, grâce à l'emploi de ladite liaison rotule, les degrés de liberté offerts à ce mouvement vont permettre aux roues de se soulever simultanément, pour franchir un obstacle traversant la chaussée, et l'une indépendamment de l'autre, pour franchir un obstacle longeant la chaussée tel qu'une banquette ou une bordure de trottoir.

Selon l'invention, l'équipage arrière comprend une barre rigide reliant un premier point de fixation situé sur l'armature de support et un deuxième point de fixation opposé situé sur le châssis.

Selon différents modes de réalisation de l'invention, qui pourront être pris ensemble ou séparément :
- la liaison rotule est obtenue par l'intermédiaire d'un silentbloc,
- le premier point de fixation est situé proche d'une zone de fixation d'une des deux roues,
- la barre rigide est fixée à l'armature de support par l'intermédiaire d'un silentbloc,
- la barre rigide est fixée au châssis par l'intermédiaire d'un silentbloc,
- la barre rigide est fixée à l'armature de support et au châssis par l'intermédiaire d'un silentbloc,
- la barre rigide est une barre de Panhard,
- le véhicule, en particulier l'équipage arrière, comprend un système de suspension entre l'armature de support et le châssis,
- le système de suspension est un système passif,
- le système de suspension comprend au moins un amortisseur,
- le système de suspension comprend deux desdits amortisseurs,
- les amortisseurs forment un angle par rapport à la verticale,
- chacun des amortisseurs est lié à une des extrémités d'un essieu rigide supportant les roues,
- l'équipage arrière comprend une barre antiroulis,
- la barre antiroulis est fixée à chacune des extrémités de l'essieu rigide,
- la barre antiroulis est liée au châssis de sorte à pouvoir travailler en torsion quand une seule des roues se lève,
- l'armature de support est en forme de U comprenant deux branches s'étendant d'une portion centrale reliant les deux branches vers une extrémité opposée libre,
- la liaison rotule est située sur la portion centrale,
- chacune des branches porte l'une des extrémités de l'essieu rigide,
- l'armature de support porte un groupe moto propulseur,
- le groupe moto propulseur comprend un moteur de nature électrique,
- ledit moteur est situé à l'avant ou à l'arrière d'un essieu arrière du véhicule.

### Brève description des figures

L'invention sera mieux comprise, et d'autres caractéristiques et avantages de celle-ci apparaîtront au cours de la lecture de la description détaillée qui va suivre, d'au moins un exemple de réalisation de l'invention donné à titre d'exemple purement illustratif et non limitatif, en référence aux dessins schématiques annexés dans lesquels :
- la figure 1 est une vue de côté d'un exemple de réalisation du tricycle selon l'invention ;
- la figure 2 est une vue de l'arrière d'un exemple de réalisation du tricycle conforme à l'invention illustrant de façon schématique le basculement du cadre par rapport à l'équipage arrière dudit tricycle ;
- la figure 3 est une vue arrière en perspective illustrant un exemple de réalisation d'une partie d'un équipage arrière du tricycle de la figure 1 ;
- la figure 4 est une vue de dessus de la figure 3 ;
- la figure 5 est une vue en perspective illustrant un exemple de réalisation d'une armature de support et d'un châssis de l'équipage arrière du véhicule de la figure 1 ;
- la figure 6 est une vue arrière illustrant l'exemple de réalisation de la figure 3 en position de repos ;
- la figure 7 est une vue arrière illustrant l'exemple de réalisation de la figure 3 en dévers.

### Description détaillée de l'invention

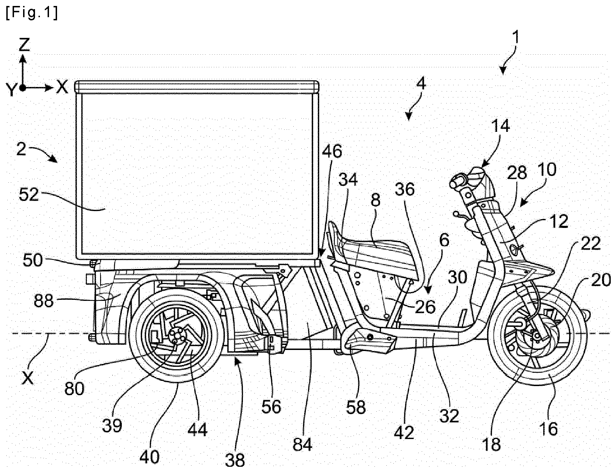

Comme illustré à la figure 1, l'invention concerne un véhicule 1 tricycle comprenant un équipage arrière 2 et un cadre 4 configuré pour permettre l'installation d'un conducteur, non-illustré, dudit véhicule 1.

Ledit cadre 4 comprend par exemple, une armature 6 sur laquelle sont rapportés une selle 8 et un équipage avant 10.

Ledit équipage avant 10 comprend ici, une fourche directionnelle 12, un guidon 14 et une roue avant 16. La fourche directionnelle 12 est articulée en rotation sur le cadre 4 pour permettre d'orienter la roue avant 16 sur la gauche ou sur la droite. Le guidon 14 est relié à la fourche 12 pour permettre son orientation par le conducteur. La roue avant 16 est libre en rotation par rapport à un axe 18 lié à la fourche 12. Ladite roue avant 16 est munie d'un système de freinage 20, ici à disque, actionnable depuis le guidon 14. Ledit équipage avant 10 comprend en outre un système avant de suspension 22 permettant d'amortir la transmission au guidon 14 et à l'armature 6 des chocs encaissés par la roue avant 16. Il s'agit, par exemple, de vérins hydrauliques montés entre des bras de la fourche 12 et l'axe 18 de la roue avant 16.

Ledit cadre 4 pourra aussi comprendre un bac de stockage 26. Il est ici situé sous la selle 8 qui est prévue pivotante pour donner accès par le dessus audit bac 26. Il est configuré pour servir de rangement pour des objets que le conducteur doit ou souhaite avoir à porter de main telle que casque, trousse de secours, manuels ou autres. Ledit bac 26 est avantageusement fixé à l'armature 6.

Ledit cadre 4 pourra encore comprendre différentes pièces d'habillage, telle qu'un habillage 28 dissimulant en partie la fourche directionnelle 12 et/ou un repose pieds 30. Lesdites pièces d'habillage sont avantageusement fixées à ladite armature 6.

Ladite armature 6 présente préférentiellement une configuration permettant au véhicule 1 d'offrir un aspect de scooter, c'est-à-dire, permettant au conducteur de reposer ses pieds dans un espace libre situé à l'avant de son buste plutôt que sur des pédales situées de part et d'autre du cadre 4. Ladite armature 6 présente de la sorte deux branches 32 de socle parallèles l'une à l'autre dans un plan sensiblement horizontal. Lesdites branches de socles 32 supportent ledit repose pieds 30. Ladite armature 6 comprend en outre un arceau arrière 34, reliant une extrémité desdites branches 32 de socle et/ou supportant, notamment, la selle 8. Elle comprend encore un arceau avant 36, reliant l'autre extrémité desdites branches 32 de socle. Ledit équipage avant 10 est articulé, par exemple, sur ledit arceau avant 36. De façon avantageuse, ledit équipage arrière 2 est muni d'un groupe moto propulseur 38 dudit véhicule 1 entraînant deux roues arrière 40, située au niveau d'un essieu arrière 39 rigide. En prévoyant une paire de roues située à l'arrière, on dispose d'un tricycle présentant une stabilité favorable.

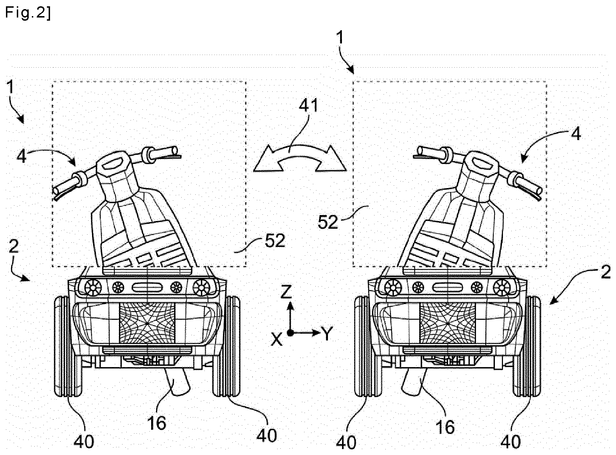

Par ailleurs, comme cela est plus particulièrement illustré par la figure 2, ledit cadre 4 est articulé en rotation par rapport audit équipage arrière 2 de manière à permettre un basculement du cadre 4 par rapport audit équipage arrière 2 en direction de la chaussée de part et d'autre d'une position verticale, selon la flèche repérée 41. Autrement dit, ledit cadre 4 peut basculer autour d'un axe d'articulation 42, visible figure 1, supporté par le plan médian des roues arrières. Encore autrement dit, alors que l'équipage arrière 2 reste horizontal, c'est-à-dire que les deux roues arrière restent en contact avec la chaussée, le cadre 4 peut basculer, sous l'effet d'une impulsion donnée par le conducteur, vers la droite ou vers la gauche. Un tel pivotement donne une bonne maniabilité au véhicule 1, en particulier en permettant au conducteur de virer sans avoir à tourner le guidon 14 ou à tout le moins en le tournant peu.

A la figure 2, on voit sur la gauche un basculement vers la gauche dudit cadre 4 permettant de virer vers la gauche et sur la droite un basculement vers la droite permettant de virer vers la droite. Bien qu'étant en présence d'un tricycle, le conducteur peut de la sorte retrouver des sensations de conduite d'un deux roues. Ledit angle de basculement est limité, par exemple, à 30°.

Pour cela, ledit véhicule comprend ici une articulation 58 en basculement, illustré figure 1. De façon avantageuse, ladite articulation 58 en basculement comprend, par exemple, une première pièce ou arbre 60, lié à l'équipage arrière 2 et une seconde pièce ou palier (non visible), lié au cadre 4, ledit palier étant articulé en rotation autour dudit arbre 60. Ledit arbre 60 et/ou ledit palier sont ainsi orientés selon ledit axe d'articulation 42.

Un exemple d'une telle articulation 58 en basculement est décrit dans le document FR3020335B1.

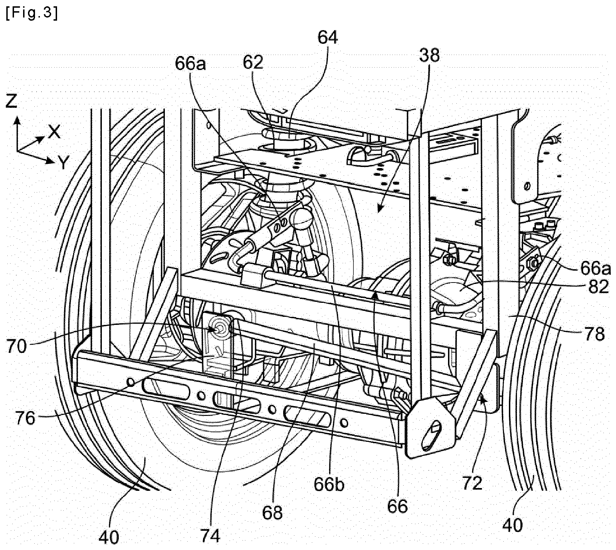

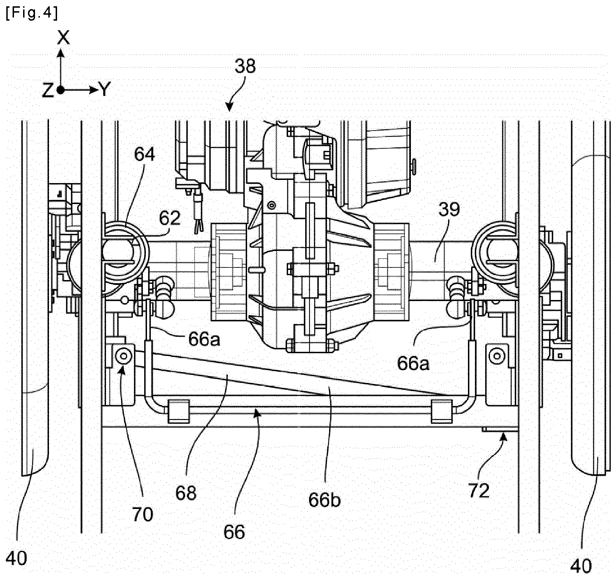

Selon l'invention, comme illustré aux figures 3 à 5, ledit équipage arrière 2 comprend une armature de support 44 lié aux deux roues dudit véhicule 1, et un châssis 46 d'une charge. Le cadre 4 est articulé en rotation autour de l'axe d'articulation par rapport audit châssis 46 de manière à permettre le basculement du cadre 4 par rapport audit équipage arrière 2 en direction de la chaussée de part et d'autre d'une position verticale.

L'armature de support 44 présente, par exemple, un profile en forme de U, ou en fer à cheval, comprenant deux branches 44a s'étendant d'une portion centrale 44b reliant les deux branches 44a vers une extrémité 44c opposée libre. Ladite portion centrale 44b est ici de forme trapézoïdale et/ou lesdites branches 44a sont parallèles entre elles.

De façon avantageuse, ledit groupe moto propulseur 38 est porté par ladite armature de support 44 ce qui confère au véhicule 1 un centre de gravité particulièrement bas. Le groupe moto propulseur 38 est notamment logé entre les deux branches 44a de l'armature de support 44. Chacune des branches 44a porte l'une des extrémités de l'essieu arrière 39. L'essieu arrière 39 s'étend ainsi perpendiculaire d'une branche 44a à l'autre.

En outre, ledit châssis 46 est avantageusement suspendue par rapport à ladite armature de support 44 à l'aide d'un système de suspension. La transmission des chocs est de la sorte amortie.

Ledit châssis 46 comprend ici une plateforme de support 50 d'une charge. Ladite plateforme de support 50 est configurée pour accueillir, par exemple, un coffre 52 ou coffret de rangement. Ladite charge est destinée à être supérieure à 100 kg, voire à 150 kg. Dans le cas d'application dans le domaine de la distribution du courrier, ledit coffre 52 est destiné à contenir le courrier et/ou des colis.

Ladite plateforme de support 50 est située, par exemple, au droit dudit groupe moto propulseur 38, au-dessus d'un passage des roues arrière 40. Pour accueillir une telle charge, l'équipage arrière présente une largeur de voie supérieure à 800 mm, voire 900 mm, la largeur de voie étant définie comme la distance entre les centres des zones de contact des roues d'un même essieu, mesurée véhicule vide.

Encore selon l'invention, ladite armature de support 44 est articulé sur ledit châssis 46 par une liaison rotule 56 de sorte à autoriser un soulèvement simultané des deux roues ou un soulèvement de l'une seulement desdites roues 40, en fonction des obstacles rencontrés.

La liaison rotule 56 permet non seulement le mouvement de l'armature de support 44 de haut en bas autour d'un axe perpendiculaire au plan de basculement, évoqué plus haut, mais aussi sa rotation autour d'un axe longitudinal X s'étendant de l'avant du véhicule 1 vers l'arrière.

On dispose de la sorte d'un véhicule 1 présentant une bonne stabilité grâce à son caractère tricycle et une bonne maniabilité par le basculement du cadre 4 par rapport à l'équipage arrière 2.

Par ailleurs, la liaison rotule 56 entre l'armature de support 44 lié aux roues 40 et le châssis 46, permet de nombreux mouvements de l'armature de support 44 par rapport au châssis 46.

Ainsi, tout d'abord, le mouvement autorisé par cette liaison 56 située entre l'armature de support 44 lié aux roues 40 et le châssis 46 font en sorte que seule la partie armature de support 44 subit une perturbation due aux obstacles rencontrés. Le fait que ce soulèvement soit isolé du châssis 46, et donc du reste de l'équipage arrière 2, permet le franchissement d'obstacles sans que tout l'équipage arrière 2 ressente de trop importantes secousses. En outre, le fait que les deux roues 40 puissent se soulever simultanément ou l'une indépendamment de l'autre, en fonction des obstacles rencontrés, ceci grâce au choix d'une liaison rotule, permet de conserver un bon contact avec la chaussée tout en limitant le travail de l'armature de support 44.

Le véhicule 1 peut ainsi s'adapter au terrain sur lequel il roule, en particulier aux obstacles à franchir tout en conservant des châssis robustes.

La liaison rotule 56 est située, notamment, entre ledit groupe moto propulseur 38, en particulier l'essieu arrière 39 dudit équipage arrière 2, et l'articulation 58 en basculement.

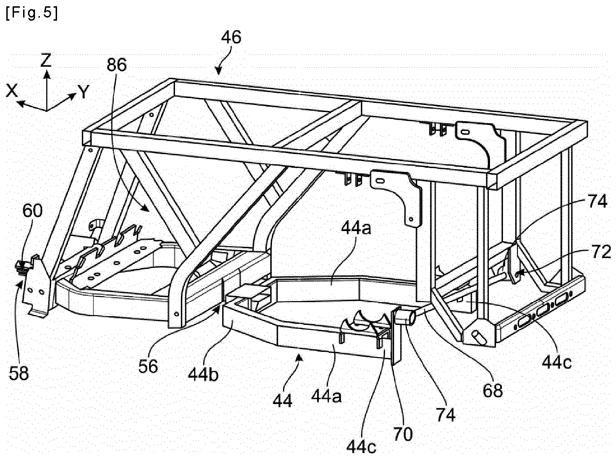

Comme illustré figure 5, le châssis 46 comprend des traverses présentant différentes orientations lui donnant ici une configuration de cage. Ladite liaison rotule 56 et ladite articulation 58 sont respectivement rapportées sur deux desdites traverses, dites traverses d'articulation. Lesdites traverses d'articulation sont distantes l'une de l'autre, selon la direction X. Elles sont parallèles entre elles et/ou situées sensiblement dans un même plan horizontal.

La liaison rotule 56 est ici obtenue par l'intermédiaire d'un silentbloc dont l'élasticité permet le mouvement de l'armature de support 44 de haut en bas, autour d'un axe perpendiculaire au plan de basculement, évoqué plus haut, et sa rotation autour de l'axe longitudinal X. Le silentbloc est situé entre l'armature de support 44 et le châssis 46, au niveau de la portion centrale de l'armature de support 44, préférentiellement ledit plan de basculement.

Le système de suspension est notamment situé à l'arrière du véhicule 1, en particulier au niveau des deux roues 40 arrière.

De façon avantageuse, le système de suspension du véhicule 1 illustré ici comprend deux amortisseurs 62 verticaux. De préférence, il s'agit d'amortisseurs 62 hydrauliques couplés à un ressort 64 hélicoïdal.

Chacun des amortisseurs 62 s'étend d'une extrémité inférieure liée à une des extrémités de l'essieu arrière 39 supportant les deux roues 40 vers une extrémité supérieure liée au châssis 46, notamment à la plateforme de support 50 de la charge.

Les amortisseurs 62 permettent de maintenir les roues du véhicule 1 en contact avec la route et d'absorber les rebonds. Les amortisseurs 62 permettent aussi de limiter différentes vibrations. Enfin, les amortisseurs 62 limitent aussi le roulis et un balancement trop prolongé du véhicule 1.

De façon avantageuse, le système de suspension comprend en outre une barre antiroulis 66 fixé à chacune des extrémités de l'essieu arrière 39.

La barre antiroulis est ici une barre de métal en forme de U située entre les deux roues 40 arrière. Chacune des extrémités 66a de la barre antiroulis 66 est reliée à une des extrémités de l'essieu arrière 39 auxquelles sont liés les amortisseurs 62 verticaux et la partie centrale 66b est liée au châssis 46 de sorte à travailler en torsion quand les deux amortisseurs ne subissent pas la même déformation. Ladite partie centrale 66b de la barre antiroulis est par exemple, orienté horizontalement, à vide. Elle est liée au châssis 46 par un plusieurs paliers, ici deux, fixés sur un longeron arrière bas du châssis 46. La barre antiroulis 66, appelée aussi barre stabilisatrice ou barre anti-dévers, permet ainsi de limiter le soulèvement de l'une des roues par rapport à l'autre. Elle limite notamment le roulis du véhicule 1 et le dévers éventuel du véhicule 1, en particulier dans les virages. Ainsi, la barre antiroulis 66 permet, de raidir le système de suspension principalement dans les virages, et non sur un obstacle.

Avantageusement, la barre antiroulis 66 présente une élasticité et forme ainsi un ressort entre les deux roues 40, améliorant ainsi l'atténuation du roulis.

En reliant de façon élastique les roues 40 arrière droite et gauche, la barre antiroulis 66 atténue le phénomène de roulis.

De façon avantageuse, l'équipage arrière comprend une barre rigide 68 reliant un premier point de fixation 70 situé sur l'armature de support 44 et un deuxième point de fixation 72 opposé situé sur le châssis 46.

De préférence, le premier point de fixation 70 est situé proche d'une zone de fixation d'une des deux roues 40 arrière et le deuxième point de fixation 72 est situé proche d'une zone de fixation de l'autre des deux roues 40 arrière. La barre rigide 68 peut être fixée, par exemple, à l'armature de support 44 et/ou au châssis 46 par l'intermédiaire d'un silentbloc. Ici, les deux extrémités de la barre rigide 68 sont fixées par l'intermédiaire d'un silentbloc 74.

De façon avantageuse, le silentbloc 74 permet de maintenir la barre rigide 68 à l'armature de support 44 et/ou au châssis 46 tout en absorbant les chocs et les vibrations et éviter qu'ils soient transmis au reste du véhicule 1 assurant un confort de conduite.

Dans le véhicule 1 illustré, la barre rigide 68 est une barre de Panhard dont le premier point de fixation 70 est situé sur une plaque 76 verticale de l'extrémité arrière de l'armature de support 44 et le deuxième point de fixation 72 est situé sur une tige 78 verticale de l'extrémité arrière du châssis 46, notamment une tige 78 liée au longeron portant les paliers de la barre antiroulis.

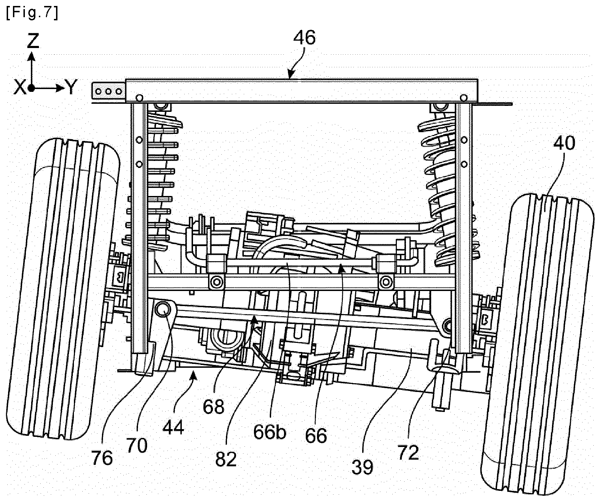

La barre rigide 68, et plus particulièrement la barre de Panhard, permet de rigidifier l'arrière du véhicule 1 et ainsi limiter la rotation de l'armature de support 44 autour d'un axe vertical autorisée par la liaison rotule 56. Comme cela est visible à la figure 7, lorsque le véhicule 1 franchit un obstacle au niveau d'une seule roue 40 arrière (ici la roue 40 arrière gauche), l'armature de support 44 s'incline de gauche à droite, alors que le châssis 46 reste horizontal.

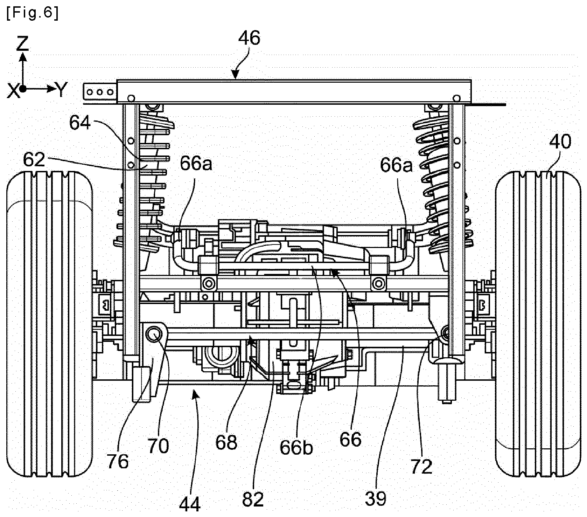

De plus, on observe aussi que le châssis 46 pivote grâce à la liaison rotule 56 et présente un écart angulaire par rapport à la position de repos visible à la figure 6.

Ainsi, la liaison rotule 56 permet une inclinaison de l'armature de support 44 autour de l'axe X et une inclinaison angulaire autour de l'axe Z qui est limitée, notamment par la barre rigide 68, ici de Panhard,
Pour pouvoir diminuer le roulis, notamment en présence de la barre rigide 68, de préférence les amortisseurs 62 forment un angle par rapport à la verticale, notamment en projection sur un plan perpendiculaire à l'axe X longitudinale.

L'angle formé par les amortisseurs par rapport à la verticale est compris entre 5 ° et 10 °, de préférence de l'ordre de 7 °.

De la sorte, les amortisseurs 62 peuvent fonctionner en accord avec la barre rigide 68 et son mouvement.

Ledit équipage arrière 2 pourra encore comprendre des systèmes de freinage 80 des roues 40 arrière, notamment à disque.

Ledit véhicule 1 pourra d'ailleurs avantageusement comprendre un système de frein de parking, ledit système étant configuré pour bloquer simultanément un déplacement avant et/ou arrière dudit véhicule 1 et ledit basculement.

Ledit système de frein de parking est, par exemple, actionnable manuellement à partir de moyens de commande hydraulique et électrique. Lesdits moyens de commande hydraulique et électrique pourront comprendre pour cela un levier, notamment situé sur le cadre 4.

De façon avantageuse, ledit cadre 4 comprend au moins une butée, ici deux, ledit véhicule 1 étant configuré pour que ledit cadre 4 vienne en contact dudit équipage arrière 2 par lesdites butées lors du basculement dudit cadre 4. Lesdites butées définissent de la sorte un angle de basculement maximum dudit cadre 4 par rapport audit équipage arrière 2, respectivement sur la gauche et sur la droite. Grâce à un tel contact, on évite en outre que l'équipage arrière 2 bascule, sous l'effet de la force centrifuge, dans une direction opposée à celle du cadre 4. Le contact des butées sur l'équipage arrière 2 s'effectue ici pour une valeur d'angle fixée, comme évoqué plus haut, par exemple à plus ou moins 30°.

De préférence, le système de suspension et/ou le système de contrôle du basculement sont des systèmes dits passifs. On entend par système passif, un système dans lequel les mouvements dynamiques du véhicule 1, par exemple le mouvement relatif de l'armature de support et de du châssis et/ou le basculement de l'avant du véhicule 1 par rapport à l'équipage arrière, sont déterminés par les conditions au sol et/ou un mouvement du corps du conducteur et/ou une vitesse et/ou une accélération du véhicule 1.

Un système passif s'oppose à un système actif ou semi-actif dans lequel les mouvements dynamiques du véhicule 1, sont contrôlés par au moins un système embarqué, généralement complexe, par exemple à base de pompes et/ou de distributeurs hydrauliques.

De façon avantageuse, ledit groupe moto propulseur 38 comprend un moteur 82 pour l'entraînement du véhicule 1. Il est ici situé à l'avant de l'essieu arrière 39 du véhicule 1.

Ledit groupe moto propulseur 38 est préférentiellement bien que non nécessairement de nature électrique. Autrement dit, son moteur est de type électrique. Il pourra s'agir de tout type de moteur électrique, en particulier de tout type de moteur électrique permettant une commande de vitesse variable. Il s'agit, par exemple, d'une machine synchrone. Ladite machine présente une puissance comprise, notamment, entre 4 et 10 kW. Bien qu'une motorisation de type électrique présente des contraintes d'intégration dans le type de tricycle selon l'invention, elle donne au véhicule 1 l'avantage de pouvoir fonctionner sans consommation d'hydrocarbures.

Dans une telle configuration, ledit groupe moto propulseur 38 comprend en outre, par exemple, un onduleur permettant d'alimenter le moteur à partir d'une source de courant continue et de faire varier sa vitesse.

Ledit véhicule 1 comprend également au moins une batterie d'alimentation 84 dudit groupe moto propulseur 38. Il s'agit, par exemple, de batteries présentant un niveau de tension supérieur à 20V, notamment de 51V. La ou les batteries sont, par exemple, du type LiFePO4.

Préférentiellement, la ou les batteries 84 sont portée par ledit châssis 46. Dans l'exemple illustré, le véhicule 1 comprend plusieurs batteries 84 situées dans un logement 86 du châssis 46 situé directement derrière le conducteur, entre le groupe moto propulseur 38 et l'arceau arrière 34 supportant la selle 8.

Les batteries 84 reposent en partie basse du châssis 46, c'est-à-dire sur un plan horizontal sensiblement similaire à celui du groupe moto propulseur 38. Il a été constaté que positionner la batterie 84 sur l'équipage arrière 2, en particulier sur une partie centrale et basse de celui-ci permet d'améliorer nettement la stabilité du véhicule 1. En effet, pour assurer l'alimentation du groupe moto propulseur, l'ensemble des batteries présente un poids significatif, notamment supérieur à 30kg, voire à 60kg ou encore à 90kg. Son positionnement joue de la sorte un rôle important dans la stabilité du véhicule 1. Le choix de positionnement indiqué plus haut augmente l'inertie dudit équipage arrière 2 et évite à ce dernier de basculer, en particulier dans les virages, et ce y compris à vitesse élevée. Ce positionnement permet aussi d'améliore encore la répartition des masses du véhicule 1 en vue d'un bon équilibrage et de conserver un centre de gravité bas, notamment sans surcharger la partie haute du châssis 46 sur laquelle repose la plateforme de support 50 de la charge à transporter.

La ou les batteries 84 peuvent aussi être situées en partie entre les deux roues arrière 40 ou encore suspendue à ladite plateforme de support 50, c'est-à-dire sous ladite plateforme de support 50, par exemple à proximité de son extrémité arrière.

D'autres variantes de l'invention sont encore possibles. A titre d'exemple, la batterie pourra être positionnée, notamment au niveau de l'armature de support 44, en porte à faux avant ou arrière. Elle pourra ainsi être située aussi bien à l'avant qu'à l'arrière d'un essieu dudit équipage arrière 2. On conserve de la sorte un centre de gravité très bas pour l'équipage arrière 2. Ledit châssis 46 est, par exemple, du type mécano-soudé. Elle pourra elle aussi être revêtue d'éléments d'habillage 88 destiné à dissimuler au moins en partie la ou les batteries 84, ladite armature de support 44 et/ou ledit groupe moto propulseur 38.

Ledit véhicule 1 pourra encore comprendre un chargeur, destiné en particulier à recharger la batterie 84 d'alimentation du groupe moto propulseur lorsque le véhicule 1 est à l'arrêt. Ledit chargeur est destiné à être relié, notamment, à un réseau électrique domestique et/ou à un réseau électrique triphasé.

Par ailleurs, ledit groupe moto propulseur pourra être configuré pour fonctionner en freinage récupératif. Autrement dit, au freinage, il pourra permettre de transformer le couple délivré par les roues en courant électrique.

## Revendications

1. Véhicule (1) tricycle comprenant un équipage arrière (2), ledit équipage comprenant une armature de support (44), lié à deux roues (40) dudit véhicule (1), et un châssis (46) d'une charge, ledit véhicule (1) comprenant en outre un cadre (4) configuré pour permettre l'installation d'un conducteur dudit véhicule (1), ledit cadre (4) étant articulé en rotation autour d'un axe d'articulation par rapport audit châssis (46) de manière à permettre un basculement du cadre (4) par rapport audit équipage arrière (2) en direction de la chaussée de part et d'autre d'une position verticale, **caractérisé par** ladite armature de support (44) étant articulé sur ledit châssis (46) par une liaison rotule (56) de sorte à autoriser un soulèvement simultanée des deux roues ou un soulèvement de l'une seulement desdites roues (40), en fonction des obstacles rencontrés, l'équipage arrière comprenant une barre rigide (68) reliant un premier point de fixation (70) situé sur l'armature de support (44) et un deuxième point de fixation (72) opposé situé sur le châssis (46).

2. Véhicule (1) selon la revendication précédente, dans lequel la barre rigide (68) est fixée à l'armature de support (44) et/ou au châssis (46) par l'intermédiaire d'un silentbloc (74).

3. Véhicule (1) selon l'une quelconque des revendications précédentes, dans lequel la barre rigide (68) est une barre de Panhard.

4. Véhicule (1) selon l'une quelconque des revendications précédentes, dans lequel l'équipage arrière est muni d'un système de suspension entre l'armature de support et le châssis, ledit système de suspension comprenant deux amortisseurs (62), chacun des amortisseurs (62) étant lié à une des deux roues (40).

5. Véhicule selon la revendication précédente, dans lequel une barre antiroulis (66) est fixée à chacun des deux amortisseurs (62).

6. Véhicule (1) selon la revendication précédente, dans lequel la barre antiroulis (66) est liée au châssis (46) de sorte à pouvoir travailler en torsion quand une seule des roues (40) se lève.

7. Véhicule (1) selon l'une quelconques des revendications 4 à 6, dans lequel les amortisseurs (62) forment un angle par rapport à la verticale.

8. Véhicule (1) selon l'une quelconque des revendications précédentes, dans lequel l'armature de support (44) est en forme de U comprenant deux branches (44a) s'étendant d'une portion centrale (44b) reliant les deux branches (44a) vers une extrémité (44c) opposée libre, la liaison rotule (56) étant située sur la portion centrale (44b) et chacune des branches (44a) portant une des deux roues (40).

9. Véhicule (1) selon l'une quelconque des revendications précédentes dans lequel l'armature de support comprend un groupe moto (38) propulseur équipé d'un moteur électrique (82).

## Patentansprüche

1. Dreirädriges Fahrzeug (1) mit einer Heckbaugruppe (2), wobei die Baugruppe einen mit zwei Rädern (40) des Fahrzeugs (1) verbundenen Tragrahmen (44) und ein Fahrgestell (46) für eine Ladung umfasst, wobei das Fahrzeug (1) ferner einen Rahmen (4) umfasst, der so ausgebildet ist, dass er die Unterbringung eines Fahrers des Fahrzeugs (1) ermöglicht ist, wobei der Rahmen (4) relativ zum Fahrgestell (46) um eine Gelenkachse drehbar angelenkt ist, um ein Kippen des Rahmens (4) relativ zur Hinterbaugruppe (2) in Richtung Fahrbahn auf beiden Seiten einer vertikalen Position zu ermöglichen, **dadurch gekennzeichnet, dass** der Tragrahmen (44) über eine Kugelgelenkverbindung (56) angelenkt ist, um je nach auftretenden Hindernissen das gleichzeitige Anheben beider Räder oder das Anheben nur eines der Räder (40) zu ermöglichen, wobei die Heckbaugruppe eine starre Stange (68) umfasst, die einen ersten Befestigungspunkt (70) am Tragrahmen (44) mit einem gegenüberliegenden zweiten Befestigungspunkt (72) am Fahrgestell (46) verbindet.

2. Fahrzeug (1) nach dem vorstehenden Anspruch, wobei die starre Stange (68) über einen Silentblock (74) am Tragrahmen (44) und/oder am Fahrgestell (46) befestigt ist.

3. Fahrzeug (1) nach einem der vorstehenden Ansprüche, wobei die starre Stange (68) eine Panhard-Stange ist.

4. Fahrzeug (1) nach einem der vorstehenden Ansprüche, wobei die hintere Baugruppe mit einem Federungssystem zwischen dem Tragrahmen und dem Fahrgestell ausgestattet ist, wobei das Federungssystem zwei Stoßdämpfer (62) umfasst, wobei jeder der Stoßdämpfer (62) mit einem der beiden Räder (40) verbunden ist.

5. Fahrzeug nach dem vorstehenden Anspruch, wobei an jedem der beiden Stoßdämpfer (62) ein Stabilisator (66) angebracht ist.

6. Fahrzeug (1) nach dem vorstehenden Anspruch, wobei der Stabilisator (66) so mit dem Fahrgestell (46) verbunden ist, dass er unter Torsionsbelastung arbeiten kann, wenn nur eines der Räder (40) angehoben wird.

7. Fahrzeug (1) nach einem der Ansprüche 4 bis 6, wobei die Stoßdämpfer (62) einen Winkel zur Vertikalen bilden.

8. Fahrzeug (1) nach einem der vorstehenden Ansprüche, wobei der Tragrahmen (44) U-förmig ist und zwei Arme (44a) umfasst, die sich von einem Mittelabschnitt (44b), der die beiden Arme (44a) verbindet, zu einem gegenüberliegenden freien Ende (44c) erstrecken, wobei sich die Kugelgelenkverbindung (56) am Mittelabschnitt (44b) befindet und jeder der Arme (44a) eines der beiden Räder (40) trägt.

9. Fahrzeug (1) nach einem der vorstehenden Ansprüche, wobei der Tragrahmen eine mit einem Elektromotor (82) ausgestattete Antriebseinheit (38) umfasst.

## Claims

1. Tricycle vehicle (1) comprising a rear assembly (2), said assembly comprising a support frame (44) connected to two wheels (40) of said vehicle (1), and a chassis (46) of a load, said vehicle (1) further comprising a frame (4) configured to allow the installation of a driver of said vehicle (1), said frame (4) being articulated in rotation about a articulation axis relative to said chassis (46) so as to allow a tilting of the frame (4) relative to said rear assembly (2) towards the roadway on either side of a vertical position, **characterized by** said support frame (44) being articulated to said chassis (46) via a ball joint connection (56) so as to allow simultaneous lifting of both wheels or lifting of only one of said wheels (40), depending on obstacles encountered, the rear assembly comprising a rigid bar (68) connecting a first attachment point (70) located on the support frame (44) and an opposite second attachment point (72) located on the chassis (46).

2. Vehicle (1) according to the preceding claim, wherein the rigid bar (68) is attached to the support frame (44) and/or to the chassis (46) via a silent block (74).

3. Vehicle (1) according to any one of the preceding claims, wherein the rigid bar (68) is a Panhard rod.

4. Vehicle (1) according to any one of the preceding claims, wherein the rear assembly is equipped with a suspension system between the support frame and the chassis, said suspension system comprising two shock absorbers (62), each of the shock absorbers (62) being connected to one of the two wheels (40).

5. Vehicle according to the preceding claim, wherein an anti-roll bar (66) is attached to each of the two shock absorbers (62).

6. Vehicle (1) according to the preceding claim, wherein the anti-roll bar (66) is connected to the chassis (46) so as to be able to operate in torsion when only one of the wheels (40) rises.

7. Vehicle (1) according to any one of claims 4 to 6, wherein the shock absorbers (62) form an angle with respect to the vertical.

8. Vehicle (1) according to any one of the preceding claims, wherein the support frame (44) is U-shaped, comprising two arms (44a) extending from a central portion (44b) which connects the two arms (44a) towards an opposite free end (44c), the ball joint connection (56) being located on the central portion (44b) and each of the arms (44a) carrying one of the two wheels (40).

9. Vehicle (1) according to any one of the preceding claims, wherein the support frame comprises a propulsion unit (38) equipped with an electric motor (82).
